# EUROPÄISCHE PATENTSCHRIFT

(11) **EP 2 603 406 B1**
(45) Veröffentlichungstag und Bekanntmachung des Hinweises auf die Patenterteilung: **18.09.2019**
(21) Anmeldenummer: 11727488.6
(22) Anmeldetag: 28.06.2011
(51) Int. Cl.: B60T 1/00, B60T 13/66, B60T 13/74, B60T 17/22

(54) **VERFAHREN ZUM ABSICHERN EINER ELEKTRISCH BETÄTIGTEN FESTSTELLBREMSE**
METHOD FOR SECURING AN ELECTRICALLY ACTUATED PARKING BRAKE
PROCÉDÉ POUR ASSURER LE BON FONCTIONNEMENT D'UN FREIN DE STATIONNEMENT ÉLECTRIQUEMENT ACTIONNÉ

(30) Priorität: 11.08.2010 DE 102010039183
(43) Veröffentlichungstag der Anmeldung: 19.06.2013
(73) Patentinhaber: Robert Bosch GmbH, 70442 Stuttgart (DE)
(72) Erfinder: BAEHRLE-MILLER, Frank, 71101 Schoenaich (DE); LEIBFRIED, Oliver, 74936 Siegelsbach (DE); BLATTERT, Dieter, 74366 Kirchheim/Neckar (DE)
(86) Internationale Anmeldenummer: PCT/EP2011/060767
(87) Internationale Veröffentlichungsnummer: WO 2012/019821

(56) Entgegenhaltungen:
- EP-A1- 1 445 162
- DE-A1- 3 341 975
- DE-A1-102005 046 300
- DE-A1-102007 030 780
- US-B1- 6 406 102

## Beschreibung

Die Erfindung betrifft ein Verfahren zum Absichern einer elektrisch betätigten Feststellbremse gemäß dem Oberbegriff des Patentanspruchs 1, sowie ein entsprechend eingerichtetes Steuergerät.

### Stand der Technik

Moderne Fahrzeuge werden immer häufiger mit elektrisch betätigten Feststellbremsen ausgestattet, die auch als automatische Parkbremsen (APB) bezeichnet werden. Derartige Systeme umfassen in der Regel ein Bedienelement, wie zum Beispiel einen Taster, mit dem die Feststellbremse verriegelt und/oder gelöst werden kann. Ein mit dem Bedienelement verbundenes Steuergerät erkennt den Feststellbremswunsch und steuert entsprechend ein Stellglied, wie zum Beispiel eine Hydraulikpumpe oder einen Elektromotor, an, um die Feststellbremse zu verriegeln oder zu lösen.

Bekannte Feststellbremsen umfassen hierzu eine mechanische Verriegelungseinrichtung, die die Bremszangen in der angezogenen Stellung verriegelt. Die Verriegelungseinrichtung wird in der Regel ebenfalls durch hydraulischen oder pneumatischen Druck betätigt oder motorisch angetrieben. Die betreffenden Elemente, wie zum Beispiel eine Hydraulikpumpe oder ein Elektromotor, werden von einem Steuergerät entsprechend angesteuert.

Die automatischen Feststellbremsen bieten für den Fahrer einen deutlichen Komfort- und Sicherheitsgewinn, da sie durch eine einfache Tasterbetätigung bedient werden können. Nach erfolgreicher Verriegelung wird dem Fahrer der ordnungsgemäße Zustand der Feststellbremse mittels einer Funktionslampe angezeigt. Das Aufleuchten der Funktionslampe bedeutet jedoch nicht, dass die Feststellbremse auch in der Lage ist, das Fahrzeug zu halten. Bei ungünstigen Bedingungen, wie z. B. wenn das Fahrzeug auf einem großen Gefälle parkt oder die Bremsseheiben sehr heiß sind, kann die Klemmkraft der Feststellbremse nicht ausreichen, um das Fahrzeug sicher zu halten. Im schlimmsten Fall besteht dann die Gefahr, dass das Fahrzeug zu rollen beginnt.

Der Stand der Technik zeigt zudem DE102005046300, EP1445162, US6406102, DE102007030780 und DE3341975.

### Offenbarung der Erfindung

Es ist daher Aufgabe der vorliegenden Erfindung, eine elektrisch betätigte Feststellbremse abzusichern, so dass sie auch unter ungünstigen Bedingungen das Fahrzeug im Stillstand hält.

Gelöst wird diese Aufgabe gemäß der Erfindung durch die in Patentanspruch 1 sowie in Patentanspruch 9 angegebenen Merkmale. Weitere Ausgestaltungen der Erfindung sind Gegenstand der Unteransprüche.

Ein wesentlicher Aspekt der Erfindung besteht darin, dass eine für die ordnungsgemäße Funktion der Feststellbremse relevante Betriebsgröße überwacht und ermittelt wird, ob die Betriebsgröße einen vorgegebenen Schwellenwert überschreitet. Unter einer ordnungsgemäßen Funktion der Feststellbremse wird dabei die Fähigkeit der Feststellbremse verstanden, das Fahrzeug im Stillstand zu halten. Eine relevante Betriebsgröße ist eine solche Größe, die die Fähigkeit der Feststellbremse, das Fahrzeug im Stillstand zu halten, beeinträchtigen kann, wie z. B. die Fahrbahnsteigung oder die Bremsentemperatur. Wenn die überwachte Betriebsgröße einen Schwellenwert überschreitet, wird der Fahrer aufgefordert, eine bestimmte Aktion auszuführen, wobei die Aktion das Einlegen eines Ganges oder das Betätigen der Betriebsbremse umfasst. Durch das Einlegen des Ganges wird das Fahrzeug zusätzlich abgesichert und ein Wegrollen des Fahrzeugs auch bei größeren Steigungen verhindert; durch das Betätigen der Betriebsbremse wird der Zuspannvorgang der Feststellbremse unterstützt, und somit eine höhere Zuspannkraft an der Feststellbremse erreicht, so dass das Fahrzeug besser gegen unbeabsichtigtes Wegrollen abgesichert ist.

Betriebsgrößen, welche die Funktion der Betriebsbremse beeinträchtigen können, sind vor allem die Fahrbahnsteigung, eine Bordnetzspannung oder eine hohe Bremsentemperatur. Gemäß der Erfindung wird daher vorzugsweise wenigstens eine der genannten Größen überwacht. Als Bremsentemperatur wird dabei die Temperatur eines beliebigen Bremsenbauteils, wie z. B. insbesondere des Bremsaktuators, verstanden.

Die Erfindung ist auch bei solchen Feststellbrems-Systemen einsetzbar, die eigenständig eine (z.B. hydraulische) Bremskraft zur Unterstützung der Feststellbremse bereitstellen können. Bei diesen Systemen, z. B. ESP-Systemen, stellt die Erfindung eine Rückfallebene dar, wenn das System wegen eines Defekts des Pumpenmotors, eines Pumpenelements, oder eines Ventils keine Druckunterstützung bereitstellen kann. In diesem Fall wird das System hinsichtlich eines Defekts überwacht und der Fahrer zu einer Aktion aufgefordert, wenn ein Defekt erkannt wurde.

Der Schwellenwert für die überwachte Betriebsgröße liegt vorzugsweise am Rande eines Wertebereichs, in dem die die Feststellbremse normalerweise ordnungsgemäß funktioniert. Im Falle der Fahrbahnsteigung kann der Schwellenwert z. B. 10% betragen.

Der Fahrer wird vorzugsweise dazu aufgefordert, den ersten Gang oder den Rückwärtsgang einzulegen, da der jeweilige Gang ein zusätzliches Bremsmoment zur Unterstützung der Feststellbremse aufweist.

Der Fahrer kann zum Ausführen einer einzigen oder mehrerer Aktionen aufgefordert werden. Bei einer Aufforderung zum Ausführen mehrerer Aktionen können diese gleichzeitig oder sequentiell ausgeführt werden.

Die Aufforderung an den Fahrer kann über eine visuelle Anzeige, wie zum Beispiel ein Display oder eine Kontrolllampe, über ein akustisches Signal, wie zum Beispiel einen Warnton und/oder über ein taktiles oder haptisches Signal, wie zum Beispiel das Vibrieren des Lenkrads, erfolgen.

Gemäß einer bevorzugten Ausführungsform der Erfindung können mehrere Schwellenwerte vorgegeben werden, wobei der Fahrer abhängig vom jeweils überschrittenen Schwellenwert zu unterschiedlichen Aktionen aufgefordert wird.

In einer bevorzugten Ausführungsform der Erfindung wird der Fahrer zum Einlegen eines Ganges oder zum Betätigen der Betriebsbremse aufgefordert, wenn der Wert der Betriebsgröße zwischen einem ersten und einem zweiten Schwellenwert liegt. Für den Fall, dass der Wert der Betriebsgröße den ersten und zweiten Schwellenwert überschreitet, kann der Fahrer zu zwei Aktionen, z. B. zum Einlegen eines Ganges und zum Betätigen der Betriebsbremse, aufgefordert werden.

Bei einer Überwachung der Fahrbahnsteigung kann ein erster Schwellenwert bei etwa 10 % und ein zweiter Schwellenwert bei etwa 20 % Steigung liegen. Unterhalb von etwa 10 % Steigung funktionieren herkömmliche Feststellbremsen üblicherweise problemlos.

Bei einer Überwachung der Bordnetzspannung können ein erster Schwellenwert zwischen 8 V und 10 V, insbesondere bei etwa 9 V, und ein zweiter Schwellenwert zwischen etwa 6 V und 8V, insbesondere bei etwa 7 V, liegen. Zwischen 11 V und 14 V funktionieren herkömmliche Feststellbremsen üblicherweise problemlos.

Bei einer Überwachung der Bremsentemperatur können ein erster Schwellenwert zwischen etwa 60 °C und 80 °C, insbesondere bei etwa 70 °C, und ein zweiter Schwellenwert zwischen etwa 80 °C und 120 °C, insbesondere bei etwa 100 °C liegen. Die Temperaturwerte beziehen sich dabei auf die Temperatur des Aktuators, wie z. B. eines auf dem Bremssattel angeordneten Elektromotors. Die Temperatur der Bremsscheibe liegt üblicherweise deutlich darüber. Der Wertebereich der Aktuator-Temperatur für eine ordnungsgemäß funktionierende Feststellbremse liegt in der Regel zwischen -20 °C und 60 °C.

Als Überschreiten eines Schwellenwerts wird im Sinne der Erfindung jedes Hinauslaufen der überwachten Größe aus einem durch den Schwellenwert begrenzten Wertebereich verstanden, also auch das Überschreiten eines Schwellenwerts in Richtung kleinerer Werte.

Die Erfindung umfasst weiterhin ein Steuergerät mit Mitteln zur Durchführung des vorausgehend beschriebenen Verfahrens.

Die Erfindung wird nachstehend anhand der beigefügten Zeichnungen beispielhaft näher erläutert, wobei Merkmale einzeln und in jeder Merkmalskombination die Gegenstände der Ansprüche und auch die vorstehend beschriebenen Ausgestaltungen vorteilhaft weiter bilden. Es zeigen:
- Fig. 1: Flussdiagramme für die Absicherung des Verriegelungszustands einer elektrisch betätigten Feststellbremse anhand der Fahrzeugsteigung und
- Fig. 2: wesentliche Verfahrensschritte für die Absicherung des Verriegelungszustands einer elektrisch betätigten Feststellbremse für die Fahrbahnsteigung, Bordnetzspannung und Bremsentemperatur.

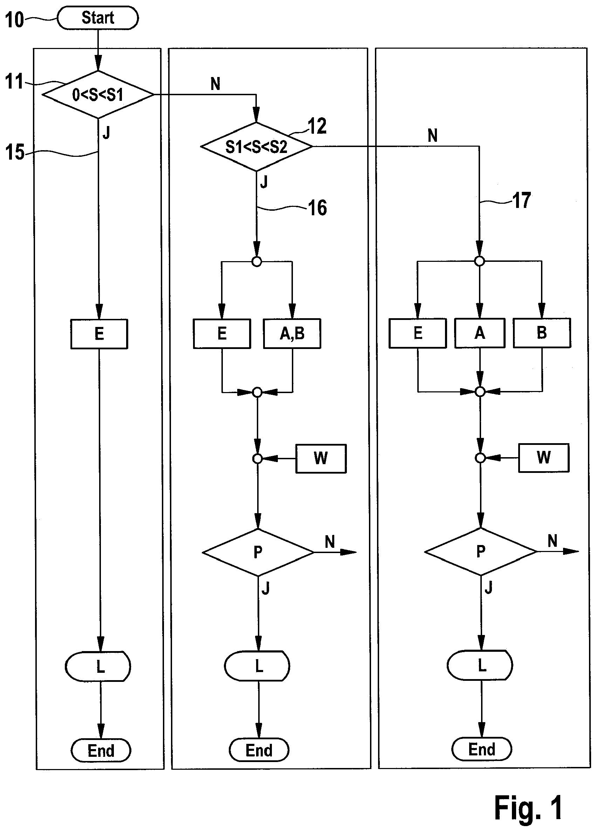

Figur 1 zeigt ein Flussdiagramm zur Absicherung einer elektrisch betätigten Feststellbremse unter Berücksichtigung der Fahrbahnsteigung. Mit Hilfe des Verfahrens kann gewährleistet werden, dass die Feststellbremse das Fahrzeug auch bei großen Steigungen von mehr als 10% sicher im Stillstand hält.

In einem ersten Schritt 10 wird die elektrisch betätigte Feststellbremse vom Fahrer zum Beispiel durch Drücken eines Tasters betätigt. Nachfolgend wird in Schritt 11 überprüft, ob die Fahrbahnsteigung kleiner ist als ein Schwellenwert S1, z. B. 10%. Falls dies der Fall ist (Fall J), werden die nachfolgenden Schritte entlang des Pfades 15 ausgeführt, ohne dass der Fahrer aufgefordert wird, eine Aktion durchzuführen. Die elektromechanische Feststellbremse wird zunächst aktiviert (E) und dem Fahrer bei erfolgreicher Verriegelung der Feststellbremse der ordnungsgemäße Zustand angezeigt (L), z. B. mittels einer Funktionslampe. Falls die Abfrage von Schritt 11 negativ ist (Fall N) wird die Abfrage von Schritt 12 durchgeführt.

Falls der Wert der Fahrbahnsteigung zwischen dem ersten Schwellenwert S1 und dem zweiten Schwellenwert S2 (S2>S1) liegt (Fall J) folgt das Verfahren dem Pfad 16. Dabei wird die Feststellbremse aktiviert (E) und eine Aufforderung an den Fahrer ausgegeben, entweder einen Gang einzulegen oder die Betriebsbremse zu betätigen (A o B). Anschließend wird überprüft (P), ob die Aktivierung und die jeweilige Fahreraktion stattgefunden haben. Falls eine oder beide Bedingungen nicht erfüllt sind (Fall N), erhält der Fahrer eine Fehlermeldung beziehungsweise Warnung (W). Für den Fall, dass beide Bedingungen erfüllt sind (Fall J), wird dem Fahrer mittels einer Funktionslampe (Schritt L) der ordnungsgemäße Verriegelungszustand der Feststellbremse signalisiert.

Falls die Abfrage von Schritt 12 negativ ist (Fall N) läuft das Verfahren entlang des Pfades 17. In diesem Fall ist die Fahrbahnsteigung auch größer als der zweite Schwellenwert S2, z. B. 20 %. Die Feststellbremse wird dann wieder aktiviert (E) und es erfolgt eine Aufforderung an den Fahrer, einen Gang einzulegen (A) und außerdem die Betriebsbremse zu betätigen (B). In Schritt P wird überprüft, ob alle vorangegangenen Bedingungen erfüllt sind. Wenn nur eine der genannten Bedingungen nicht erfüllt ist (Fall N), wird dem Fahrer eine Fehlermeldung (W) signalisiert. Falls alle Bedingungen erfüllt sind (Fall J), wird dem Fahrer mittels einer Funktionslampe (L) der ordnungsgemäße Verriegelungszustand der Feststellbremse signalisiert.

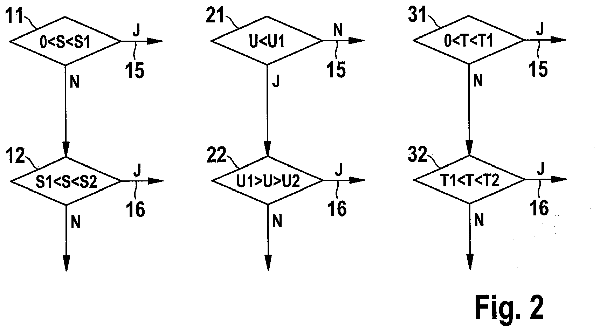

Fig. 2 zeigt drei Flussdiagramme, wobei im ersten Diagramm die Abfragen 11, 12 und 13 von Fig. 1 in verkürzter Form darstellt sind.

Das mittlere Flussdiagramm von Fig. 2 zeigt entsprechende Abfragen in Bezug auf die Bordnetzspannung U anstelle der Fahrbahnsteigung S. In Schritt 21 wird dabei überprüft, ob der Wert der Bordnetzspannung kleiner ist als ein Schwellenwert U1 ist. Falls nein (Fall N) wird der Pfad 15 (siehe Fig. 1) weiterverfolgt. Falls ja (Fall J) wird überprüft (Schritt 22), ob der Wert der Bordnetzspannung zwischen dem Schwellenwert U1 und dem Schwellenwert U2 liegt, mit U2<U1. Falls ja (Fall J) wird der Pfad 16 weiterverfolgt (siehe Fig. 1). Falls nein (Fall N) wird der Pfad 17 (siehe Fig. 1) weiterverfolgt.

Analog werden die Schritte 31, 32 und 33 des dritten Flussdiagramms in Fig. 2 durchgeführt, wobei T1 ein erster Schwellenwert und T2 ein zweiter Schwellenwert für die Bremsentemperatur T ist, mit T2>T1.

## Patentansprüche

1. Verfahren zur Absicherung einer elektrisch betätigten Feststellbremse, **gekennzeichnet durch** folgende Schritte:
- Überwachen einer für die ordnungsgemäße Funktion der Feststellbremse relevanten Betriebsgröße,
- Ermitteln, ob die Betriebsgröße einen vorgegebenen Schwellenwert überschreitet, und
- Auffordern des Fahrers in Abhängigkeit vom Wert der Betriebsgröße, eine bestimmte Aktion auszuführen, wobei die Aktion das Einlegen des Gangs oder das Betätigen der Betriebsbremse umfasst.

2. Verfahren nach dem vorhergehenden Anspruch, **dadurch gekennzeichnet, dass** mehrere Schwellenwerte vorgegeben sind und der Fahrer, je nachdem, welcher Schwellenwert überschritten wird, zum Ausführen unterschiedlicher Aktionen aufgefordert wird.

3. Verfahren nach dem vorhergehenden Anspruch, **dadurch gekennzeichnet, dass** der Fahrer, wenn der Wert der Betriebsgröße zwischen einem ersten und einem zweiten Schwellenwert liegt, zum Einlegen des Gangs oder zum Betätigten der Betriebsbremse aufgefordert wird.

4. Verfahren nach Anspruch 2 oder 3, **dadurch gekennzeichnet, dass** der Fahrer, wenn der Wert der Betriebsgröße den ersten und zweiten Schwellenwert überschreitet, zum Einlegen des Gangs und zum Betätigten der Betriebsbremse aufgefordert wird.

5. Verfahren nach einem der vorhergehenden Ansprüche, **dadurch gekennzeichnet, dass** die Betriebsgröße die Fahrbahnsteigung, eine Bordnetzspannung oder eine Bremsentemperatur ist.

6. Verfahren nach dem vorhergehenden Anspruch, **dadurch gekennzeichnet, dass** bei Überwachung der Fahrbahnsteigung ein erster Schwellenwert bei etwa 10% und ein zweiter Schwellenwert bei etwa 20% Steigung liegt.

7. Verfahren nach einem der beiden vorhergehenden Ansprüche, **dadurch gekennzeichnet, dass** bei Überwachung der Bordnetzspannung ein erster Schwellenwert zwischen etwa 8 V und 10 V, insbesondere bei etwa 9 V, und ein zweiter Schwellenwert zwischen etwa 6 V und 8 V, insbesondere bei etwa 7 V, liegt.

8. Verfahren nach einem der Ansprüche 5 bis 7, **dadurch gekennzeichnet, dass** bei Überwachung der Bremsentemperatur ein erster Schwellenwert zwischen etwa 60 °C und 80 °C, insbesondere bei etwa 70 °C, und ein zweiter Schwellenwert zwischen etwa 80 °C und 120 °C, insbesondere bei etwa 100 °C, liegt.

9. Steuergerät, das derart eingerichtet ist, dass zur Absicherung einer elektrisch betätigten Feststellbremse folgende Schritte durchgeführt werden:
- Überwachen einer für die ordnungsgemäße Funktion der Feststellbremse relevanten Betriebsgröße,
- Ermitteln, ob die Betriebsgröße einen vorgegebenen Schwellenwert überschreitet, und
- Auffordern des Fahrers in Abhängigkeit vom Wert der Betriebsgröße, eine bestimmte Aktion auszuführen, wobei die Aktion das Einlegen des Gangs oder das Betätigen der Betriebsbremse umfasst.

## Claims

1. Method for securing an electrically actuated parking brake, **characterized by** the following steps:
- monitoring an operational variable which is relevant for the satisfactory function of the parking brake,
- determining whether the operational variable exceeds a predefined threshold value, and
- requesting the driver, as a function of the value of the operational variable, to carry out a specific action, wherein the action comprises engaging the gear speed or actuating the service brake.

2. Method according to the preceding claim, **characterized in that** a plurality of threshold values are predefined, and depending on which threshold value is exceeded the driver is requested to execute different actions.

3. Method according to the preceding claim, **characterized in that** if the value of the operational variable is between a first and a second threshold value the driver is requested to engage the gear speed or to actuate the service brake.

4. Method according to Claim 2 or 3, **characterized in that** if the value of the operational variable exceeds the first and second threshold values, the driver is requested to engage the gear and to actuate the service brake.

5. Method according to one of the preceding claims, **characterized in that** the operational variable is the gradient of the carriageway, an on-board power system voltage or a brake temperature.

6. Method according to the preceding claim, **characterized in that** when the gradient of the carriageway is monitored a first threshold value is approximately 10% and a second threshold value is approximately 20% gradient.

7. Method according to one of the two preceding claims, **characterized in that** when the on-board power system voltage is monitored a first threshold value is between approximately 8 V and 10 V, and is, in particular, approximately 9 V, and a second threshold value is between approximately 6 V and 8 V, and is, in particular, approximately 7 V.

8. Method according to one of Claims 5 to 7, **characterized in that** when the brake temperature is monitored, a first threshold value is between approximately 60°C and 80°C, and is, in particular, approximately 70°C, and a second threshold value is between approximately 80°C and 120°C, and is, in particular, approximately 100°C.

9. Control unit which is configured in such a way that in order to secure an electrically actuated parking brake the following steps are carried out:
- monitoring an operational variable which is relevant for the satisfactory function of the parking brake,
- determining whether the operational variable exceeds a predefined threshold value, and
- requesting the driver, as a function of the value of the operational variable, to carry out a specific action, wherein the action comprises engaging the gear speed or actuating the service brake.

## Revendications

1. Procédé de sécurisation d'un frein de stationnement à actionnement électrique, **caractérisé par** les étapes suivantes :
- surveillance d'un paramètre de fonctionnement pertinent pour le fonctionnement correct du frein de stationnement,
- détermination si le paramètre de fonctionnement dépasse une valeur seuil prédéfinie, et
- demande faite au conducteur, en fonction de la valeur du paramètre de fonctionnement, d'exécuter une certaine action, l'action comprenant le passage de la vitesse ou l'actionnement du frein de fonctionnement.

2. Procédé selon la revendication précédente, **caractérisé en ce que** plusieurs valeurs seuils sont prédéfinies et il est demandé au conducteur, en fonction de la valeur seuil qui est dépassée, d'exécuter différentes actions.

3. Procédé selon la revendication précédente, **caractérisé en ce qu'**il est demandé au conducteur, lorsque la valeur du paramètre de fonctionnement se situe entre une première et une seconde valeur seuil, de passer la vitesse ou d'actionner le frein de fonctionnement.

4. Procédé selon la revendication 2 ou 3, **caractérisé en ce qu'**il est demandé au conducteur, lorsque la valeur du paramètre de fonctionnement dépasse la première et la seconde valeur seuil, de passer la vitesse et d'actionner le frein de fonctionnement.

5. Procédé selon une des revendications précédentes, **caractérisé en ce que** le paramètre de fonctionnement est la pente de la chaussée, une tension du réseau de bord, ou une température des freins.

6. Procédé selon la revendication précédente, **caractérisé en ce que**, en cas de surveillance de la pente de la chaussée, une première valeur seuil se situe à environ 10 %, et une seconde valeur seuil à environ 20 % de pente.

7. Procédé selon une des deux revendications précédentes, **caractérisé en ce que**, en cas de surveillance de la tension du réseau de bord, une première valeur seuil se situe entre environ 8 V et 10 V, en particulier à environ 9 V, et une seconde valeur seuil entre environ 6 V et 8 V, en particulier à environ 7 V.

8. Procédé selon une des revendications 5 à 7, **caractérisé en ce que**, en cas de surveillance de la température des freins, une première valeur seuil se situe entre environ 60 °C et 80 °C, en particulier à environ 70 °C, et une seconde valeur seuil se situe entre environ 80 °C et 120 °C, en particulier à environ 100 °C.

9. Appareil de commande qui est aménagé de manière à ce que, pour sécuriser un frein de stationnement à actionnement électrique, les étapes suivantes sont réalisées :
- surveillance d'un paramètre de fonctionnement pertinent pour le fonctionnement correct du frein de stationnement,
- détermination si le paramètre de fonctionnement dépasse une valeur seuil prédéfinie, et
- demande faite au conducteur, en fonction de la valeur du paramètre de fonctionnement, de réaliser une certaine action, l'action comprenant le passage de la vitesse ou l'actionnement du frein de stationnement.
